# EUROPÄISCHE PATENTSCHRIFT

(11) **EP 1 801 429 B1**
(45) Veröffentlichungstag und Bekanntmachung des Hinweises auf die Patenterteilung: **10.06.2015**
(21) Anmeldenummer: 06026794.5
(22) Anmeldetag: 22.12.2006
(51) Int. Cl.: F16B 12/02, F16B 12/44, A47B 31/00, A47B 47/00

(54) **Eckverbindung, insbesondere für einen Servierwagen**
Corner connection, especially for a serving trolley
Assemblage d'angle, notamment pour un chariot de service

(30) Priorität: 23.12.2005 DE 202005020506 U
(43) Veröffentlichungstag der Anmeldung: 27.06.2007
(73) Patentinhaber: Rieber GmbH & Co. KG, 72770 Reutlingen (DE)
(72) Erfinder: Rieber, Heinrich, 72734 Reutlingen (DE)
(74) Vertreter: Schumacher & Willsau

(56) Entgegenhaltungen:
- EP-A- 1 245 470
- DE-U1- 29 721 771
- DE-U1- 29 900 523
- FR-A- 1 184 688
- FR-A- 2 795 461
- US-A- 2 886 186
- US-A- 3 981 251

## Beschreibung

Die Erfindung betrifft eine Eckverbindung, insbesondere für einen Servierwagen, zwischen einem insbesondere rohrförmigen Träger und einer Ecke eines plattenförmigen Elements.

Bekannt sind Servierwagen aus Edelstahl, die zwischen vier rohrförmigen Trägern mit kreisrundem Querschnitt ein oder mehrere Blechtabletts aufweisen. Zum Verbinden der Blechtabletts mit den Trägern an den jeweiligen Ecken der Blechtabletts sind die Blechtabletts mit den Trägern verschweißt. Um dieser Verbindung eine ausreichende Stabilität zu verleihen, sind die Blechtabletts an ihrem Rand abgewinkelt, so dass eine bis auf die am Träger anliegenden Ecken umlaufende Schürze ausgebildet ist. Solche Servierwagen erfüllen zwar die an den harten Einsatz in der Gemeinschaftsverpflegung gestellten Anforderungen, nehmen nach der Herstellung und somit bis zur Auslieferung an den Kunden aber erheblichen Platz in Anspruch.

Die französische Patentschrift FR 1 184 688 beschreibt eine Eckverbindung für ein Regal, die für einen Betrachter im Wesentlichen unsichtbar sein soll. Ein Regalblech weist abgebogene Schürzen auf und an jeder Ecke vorgesehene Aussparungen für einen Träger. Ein Eckträger wird von innen her gegen die Schürzen der Regalplatte gelegt, nachdem zuvor ein Befestigungsbolzen mit einem hammerartigen Kopf in einen speziell ausgebildeten länglichen Schlitz im Träger eingeschoben wurde. Nach Aufschieben des Eckträgers auf den Befestigungsbolzen wird der Eckträger mittels einer Mutter unter Vorspannung gegen den Träger und gegen die Schürzen der Regalplatte gezogen.

Aus der Patentschrift US 3,981,251 ist eine Eckverbindung für ein Regal bekannt, bei der eine Regalblechplatte trägerartig ausgeformte Seitenschürzen aufweist und in einem Eckbereich ausgespart ist, um dort mit einer Abdeckkappe versehen zu werden, die die Form einer einspringenden Ecke hat. Von der Innenseite der Regalblechplatte her wird dann ein Eckträger eingeschoben, der in passend ausgebildete Aussparungen in den trägerartigen Seitenschürzen eingreift. Der Eckträger wird dann mittels einer entlang der Winkelhalbierenden verlaufenden Blechschraube gegen das Blechplattenelement vorgespannt, indem die Blechschraube in einen vertikal verlaufenden Träger eingedreht wird.

Die französische Offenlegungsschrift FR 2 795 461 beschreibt eine Eckverbindung für einen fahrbaren Transportwagen. Auf einen vertikal verlaufenden Träger wird ein erstes Kunststoffformstück aufgeschoben, das eine entlang der Winkelhalbierenden verlaufende Gewindebuchse aufweist. Auf das erste Formstück wird ein Eckträger formschlüssig aufgesteckt und mittels eines Befestigungsbolzens befestigt. Auf dem Eckträger liegen dann die Eckbereiche von Blechplattenelementen, die die einzelnen Etagen des Transportwagens bilden, auf.

Aus der Patentschrift US 2,886,186 ist ein fahrbarer Transportwagen bekannt, dessen oberste Tablettebene abnehmbar ausgebildet ist. Die nicht abnehmbaren, unteren Tablettebenen sind durch Blechtabletts mit umlaufenden Schürzen gebildet. Jedes Blechtablett ist an jeder Ecke mittels eines entlang der Winkelhalbierenden verlaufenden und sich durch den Träger hindurch erstreckenden Schraubbolzens mit dem Träger verbunden.

Aus dem deutschen Gebrauchsmuster DE 297 21 771 U1, dem deutschen Gebrauchsmuster DE 299 00 523 U1 und der europäischen Patentanmeldung EP 1 245 470 A2, sind verschiedene Ausgestaltungen von Stoßschutzecken für Transportwagen bekannt.

Mit der Erfindung soll eine stabile und dabei zerlegbare Eckverbindung geschaffen werden.

Erfindungsgemäß ist hierzu eine Eckverbindung, insbesondere für einen Servierwagen, zwischen einem Träger und einer Ecke eines plattenförmigen Elements vorgesehen, die einen Eckträger, der an einer Ecke des plattenförmigen Elements befestigt ist, und einen Befestigungsbolzen zum Verbinden des Eckträgers und des Trägers unter Vorspannung aufweist, wobei sich der Befestigungsbolzen im wesentlichen in Richtung der Winkelhalbierenden der Ecke des plattenförmigen Elements erstreckt, wobei das plattenförmigen Element an seinen Seitenkanten jeweils eine Schürze (26, 28) aufweist, die sich von einer Grundfläche des plattenförmigen Elements (16) senkrecht nach unten erstreckt, wobei der Eckträger (32) einerseits an der Unterseite der Grundplatte des plattenförmigen Elements und andererseits an den Innenseiten der Schürzen (26, 28) anliegt, bei der der Eckträger (32) auf jeder Seite der Winkelhalbierenden mittels einer Schraube (60a, 60b) an den Schürzen (26, 28) befestigt ist.

Durch Vorsehen eines Eckträgers und eines Befestigungsbolzens kann die Eckverbindung sehr stabil ausgestaltet werden, und zwar im wesentlichen unabhängig von der Beschaffenheit und dem Material des plattenförmigen Elements. Insbesondere bei Verwendung von Edelstahlblechen als plattenförmige Elemente kann dadurch auch ohne Vorsehen einer Schweißnaht eine äußerst stabile Eckverbindung geschaffen werden, die den harten Anforderungen im Gemeinschaftsverpflegungsbetrieb standhält, aber dennoch zerlegbar ist. Die erfindungsgemäße Eckverbindung kann beispielsweise an Servierwagen oder auch an Regalen eingesetzt werden, allgemein dort, wo die Ecke eines plattenförmigen Elements mit einem Träger verbunden werden soll. Indem sich der Befestigungsbolzen im wesentlichen in Richtung der Winkelhalbierenden der Ecke des plattenförmigen Elements erstreckt, kann die Eckverbindung sehr stabil aufgebaut werden, da eine Vorspannung in Richtung der Winkelhalbierenden erzeugt werden kann und dadurch auf den Träger einwirkende Belastungen aus verschiedenen Richtungen zuverlässig aufgenommen werden können. Dies ist beispielsweise von besonderer Bedeutung, wenn die Eckverbindung an einem Servierwagen vorgesehen ist, bei dem die Rollen an unteren Enden der Träger befestigt sind und dadurch beim Überfahren von Schwellen erhebliche Hebelkräfte auf die Eckverbindungen wirken.

In Weiterbildung der Erfindung erstreckt sich der Befestigungsbolzen vollständig durch den Träger hindurch.

Auf diese Weise kann der Befestigungsbolzen in besonders stabiler Weise am Träger angreifen, so dass die gesamte Eckverbindung stabil ausgeführt werden kann.

In Weiterbildung der Erfindung ist der Befestigungsbolzen als Schraubbolzen ausgebildet und greift in ein passendes Innengewinde am Eckträger ein.

Auf diese Weise ist die Eckverbindung einfach montierbar, da der Befestigungsbolzen von außen durch den Träger hindurch in den Eckträger eingeschraubt werden kann. Bei Servierwagen mit vier Trägern ist die Eckverbindung dadurch sehr gut von außen zugänglich, so dass der Servierwagen schnell und in einfacher Weise aufgebaut werden kann.

In Weiterbildung der Erfindung weist der Eckträger eine dem Träger zugewandte Anlagefläche auf, die an eine Außenkontur des Trägers angepasst ist, und liegt unter der Vorspannung des Befestigungsbolzens mit der Anlagefläche vollflächig an dem Träger an.

Durch vollflächige Anlage des Eckträgers an dem Träger mit einer Anlagefläche, die an eine Außenkontur des Trägers angepasst ist, entsteht eine sehr stabile Eckverbindung. Beispielsweise weist der Träger eine zylinderabschnittsförmige Einbuchtung auf, die an einem kreisrohrförmigen Träger anliegt.

In Weiterbildung der Erfindung weist das plattenförmige Element wenigstens im Eckbereich eine von einer Grundfläche senkrecht abragende Schürze auf, wobei der Eckträger einerseits bündig an der Grundfläche und andererseits bündig an der Schürze anliegt.

Durch bündige Anlage des Eckträgers an dem plattenförmigen Element kann eine großflächige und sichere Kraftübertragung vom Eckträger in das plattenförmige Element sichergestellt werden. Der Eckträger liegt somit in einer Ecke des plattenförmigen Elements, das durch die Grundplatte sowie zwei senkrecht aufeinander zulaufende Schürzen gebildet ist und lediglich im unmittelbaren Eckbereich, in dem dann der Träger zu liegen kommt, sind die Schürzen und gegebenenfalls die Grundplatte ausgespart. Die einzelnen Bestandteile der Eckverbindung sind dabei vorteilhafterweise so dimensioniert, dass ohne die Vorspannung des Befestigungsbolzens noch einige Zehntel Millimeter Luft zwischen der Anlagefläche des Eckträgers und der Außenfläche des Trägers vorhanden sind. Erst nach Festziehen des Befestigungsbolzens legt sich die Anlagefläche des Eckträgers bündig an die Außenfläche des Trägers an. Gleichzeitig kann der Eckträger dadurch gegen die Innenseiten der Schürzen des plattenförmigen Elements sowie gegebenenfalls auch gegen die Grundfläche gezogen werden. Vorteilhafterweise sind die Schürze und der Eckträger lösbar miteinander verbunden. Dies ist insbesondere bei einem Edelstahlservierwagen von Vorteil, wenn beispielsweise das plattenförmige Element als Blechbiegeteil ausgebildet ist und vor dem Zusammenbau mit einem in die Ecke eingelegten Eckträger versehen wird.

In Weiterbildung der Erfindung ist eine Stoßschutzecke vorgesehen, die im Bereich der Eckverbindung den Träger und die Ecke des plattenförmigen Elements wenigstens abschnittsweise abdeckt. Durch Vorsehen einer Stoßschutzecke kann zum einen ein Stoßschutz erreicht werden, zum anderen können aber auch der Befestigungsbolzen der Eckverbindung sowie gegebenenfalls weitere Schraub- oder Rastverbindungen der Eckverbindungen abgedeckt werden. Dadurch wird nicht nur eine optisch ansprechende Eckverbindung erreicht, sondern es können auch hygienisch bedenkliche Zwischenräume abgedeckt werden, in denen sich sonst Verschmutzungen ansammeln könnten.

In Weiterbildung der Erfindung ist die Stoßschutzecke am Eckträger befestigt und vorteilhafterweise greift die Stoßschutzecke mit Rastelementen in passende Gegenrastelemente des Eckträgers ein.

Die Stoßschutzecke kann dadurch nach Anziehen des Befestigungsbolzens sowie gegebenenfalls weiterer Befestigungsschrauben auf die Eckverbindung und speziell auf den Eckträger aufgerastet werden. Dadurch sind von außerhalb der Eckverbindung keine Schraubverbindungen mehr sichtbar und dennoch wird die Stoßschutzecke zuverlässig an dem Eckträger gehalten. Beispielsweise erstrecken sich Rasthaken des Eckträgers durch Durchgangsöffnungen in einer Schürze des plattenförmigen Elements, wobei die Stoßschutzecke dann auf die Rasthaken aufgerastet wird. Die Stoßschutzecke kann weiterhin im montierten Zustand bündig sowohl an einer Außenseite der im Bereich der Eckverbindung liegenden Schürzen sowie an einer Außenfläche des Trägers anliegen und dadurch neben einer reinen Stoßschutzfunktion die Eckverbindung weiter stabilisieren.

In Weiterbildung der Erfindung ist der Träger im Bereich der Eckverbindung mit wenigstens einer durch plastische Verformung des Trägers gebildeten Einsenkung versehen, an deren Grund eine die Rohrwandung durchsetzende Durchgangsbohrung angeordnet ist.

Mittels einer solchen Einsenkung wird zum einen Platz für den Kopf eines Schraubbolzens geschaffen, so dass dieser nicht oder lediglich unwesentlich über eine Außenfläche des Trägers vorsteht. Zum anderen wird mittels einer solchen Einsenkung eine lokale Versteifung des Trägers erzielt. Der Träger kann die durch den Befestigungsbolzen auf ihn einwirkenden Kräfte dadurch besser aufnehmen. Die Einsenkung wird dabei zweckmäßigerweise in einem Werkzeug so angebracht, dass der Querschnitt des rohrförmigen Trägers sich im Bereich der Einsenkung nicht über eine Umhüllende des Trägers im weiteren Verlauf hinaus erstreckt.

In Weiterbildung der Erfindung weist der Träger einen kreisförmigen Querschnitt und im Bereich der Eckverbindung zwei einander gegenüberliegende, durch plastische Verformung des Trägers gebildete Einsenkungen auf, an deren Grund jeweils eine die Rohrwandung durchsetzende Durchgangsbohrung angeordnet ist.

Mittels zweier, einander gegenüberliegender Einsenkungen kann der Träger im Bereich der Durchgangsbohrung weiter versteift werden. Das Anbringen der Durchgangsbohrung, die die Stabilität des Trägers im Prinzip schwächt, kann dadurch mehr als ausgeglichen werden.

In Weiterbildung der Erfindung sind die Einsenkung und die Durchgangsbohrung in einem Arbeitsgang mittels Eindrücken eines Lochstempels in den Träger gebildet.

Überraschenderweise hat sich gezeigt, dass durch Eindrücken eines Lochstempels in den Träger nicht nur die Durchgangsbohrung sondern darüber hinaus auch die Einsenkung in einem Arbeitsgang ausbilden lassen. Erforderlichenfalls wird der rohrförmige Träger dabei in einem Werkzeug so gehalten, dass sich sein Außenumfang nicht über die Umhüllende des übrigen Trägerverlaufs hinaus erstreckt. Durch einfaches Eindrücken eines Lochstempels ergibt sich dadurch nicht nur eine exakt berandete Durchgangsbohrung sondern darüber hinaus auch noch eine sanft in die übrige Außenwand des Trägers übergehende Einsenkung, die für einen gleichmäßigen Kraftverlauf innerhalb des Trägers vorteilhaft ist.

In Weiterbildung der Erfindung sind der Träger und das plattenförmige Element als Blechteil ausgebildet und der Eckträger und die Stoßschutzecke sind als Kunststoffteile ausgebildet.

Weitere Merkmale und Vorteile der Erfindung ergeben sich aus den Ansprüchen und der nachfolgenden Beschreibung einer bevorzugten Ausführungsform der Erfindung. In den Zeichnung zeigen:
- Fig. 1: eine Vorderansicht eines Servierwagens für die Gemeinschaftsverpflegung mit erfindungsgemäßen Eckverbindungen,
- Fig. 2: eine Seitenansicht des Servierwagens der Fig. 1,
- Fig. 3: eine Draufsicht auf den Servierwagen der Fig. 1,
- Fig. 4: eine perspektivische abschnittsweise Ansicht einer efindungsgemäßen Eckverbindung,
- Fig. 5: eine perspektivische abschnittsweise Ansicht eines plattenförmigen Elements und eines Eckträgers der Eckverbindung der Fig. 4,
- Fig. 6: eine perspektivische Ansicht des Eckträgers der Eckverbindung der Fig. 4,
- Fig. 7: eine perspektivische Ansicht einer Stoßschutzecke der Eckverbindung der Fig. 4,
- Fig. 8: eine abschnittsweise perspektivische Ansicht eines Trägers im Bereich der Eckverbindung der Fig. 4,
- Fig. 9: eine Schnittansicht der Stoßschutzecke der Fig. 7,
- Fig. 10: eine Schnittansicht der erfindungsgemäßen Eckverbindung im zusammengebauten Zustand und
- Fig. 11: eine Schnittansicht des Eckträgers der Fig. 6.

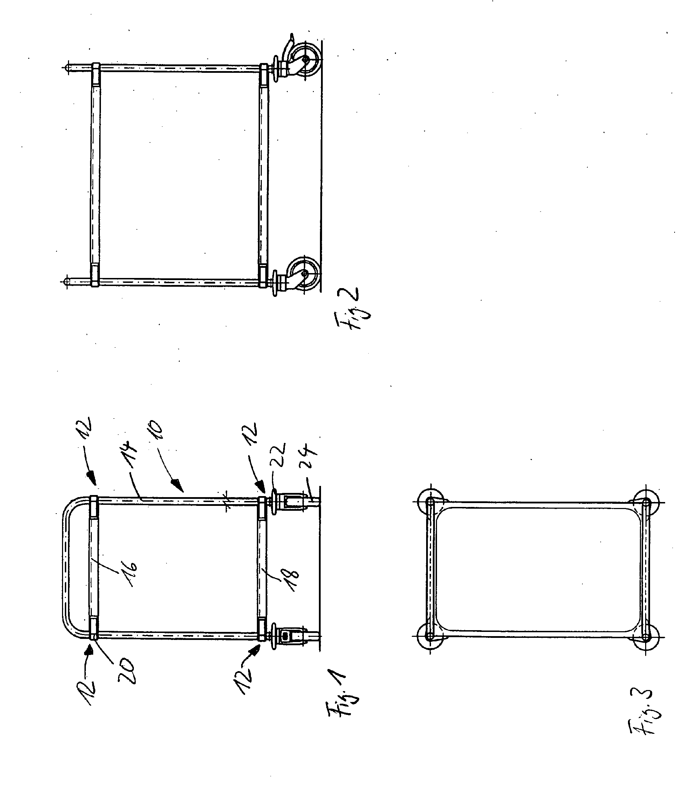

Die Vorderansicht der Fig. 1 zeigt einen Servierwagen 10, der mit insgesamt acht erfindungsgemäßen Eckverbindungen 12 versehen ist, wobei in der Darstellung der Fig. 1 lediglich vier Eckverbindungen 12 erkennbar sind. Die in Fig. 1 sichtbaren Eckverbindungen 12 verbinden vertikal angeordnete Abschnitte eines insgesamt U-förmigen Trägers 14 mit einem plattenförmigen Element 16 bzw. 18. Die plattenförmigen Elemente 16, 18 sind in bekannter Weise als Blechbiegeteile ausgebildet und der Träger 14 ist als Rohr mit kreisrundem Querschnitt ausgeführt. Bei Servierwagen nach dem Stand der Technik sind im Bereich der Eckverbindungen die Blechplatten mit dem Träger verschweißt. Erfindungsgemäß sind die Eckverbindungen 12 geschraubt und werden nachfolgend noch detailliert erläutert.

Bereits in Fig. 1 ist erkennbar, dass die Eckverbindungen 12 jeweils eine Stoßschutzecke 20 aufweisen, die von außen auf die Ecke aufgesetzt ist und die auch den Träger 14 außen umgibt. Mittels der Stockschutzecke 20 werden dadurch glattflächige Übergänge im Bereich jeder Eckverbindung 12 geschaffen.

Anhand der Fig. 1 bis 3 ist zu erkennen, dass ein Stoßschutzring 22 oberhalb eines jeden Rades 24 des Servierwagens 10 angeordnet ist. Diese Stoßschutzringe 22 bilden die am weitesten vorragenden Teile des Umrisses des Servierwagens 10 und übernehmen dadurch in der Hauptsache die Stoßschutzfunktion, wenn der Servierwagen 10 beispielsweise gegen eine Wand gefahren wird. Speziell dann, wenn der Servierwagen 10 aber an einen Tisch oder einen Schrank herangefahren wird, der auf Füßen steht, übernehmen dann die Stoßschutzecken 20 der Eckverbindungen einen Stoßschutz, da ja dann die Stoßschutzringe 22 unter den Schrank einfahren und ihre Stoßschutzfunktion nicht erfüllen können.

Anhand der Darstellungen der Fig. 1 bis 3 ist auch zu erkennen, dass beim Schieben des Servierwagens 10 erhebliche Kräfte an den Eckverbindungen 12 auftreten können, wenn der Servierwagen 10 beispielsweise im voll beladenen Zustand mit Schwung über eine Türschwelle gefahren wird. Die Anforderungen an die Festigkeit der Eckverbindungen 12 sind daher erheblich, vor allem deshalb, da der Servierwagen 10 für den harten Einsatz im Bereich der Gemeinschaftsverpflegung vorgesehen ist.

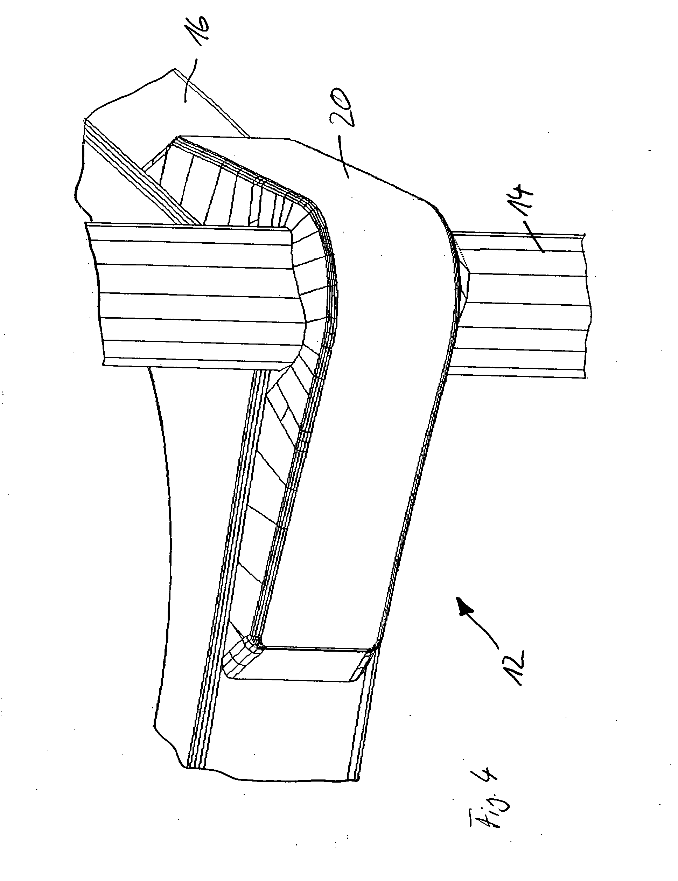

Die perspektivische Ansicht der Fig. 4 zeigt eine Eckverbindung 12 detaillierter. Mittels der Eckverbindung 12 werden der Träger 14 mit kreisrundem Querschnitt und das Blechplattenelement 16 miteinander verbunden. Die Eckverbindung 12 ist geschraubt ausgeführt, wobei die Stoßschutzecke 20 in der Darstellung der Fig. 4 die Schraubverbindungen vollständig abdeckt. Anhand der Darstellung der Fig. 4 ist zu erkennen, dass mittels der Stoßschutzecke 20 glattflächige Übergänge zwischen Blechplattenelement 16 und Träger 14 geschaffen werden, die wenig verschmutzungsempfindlich sind.

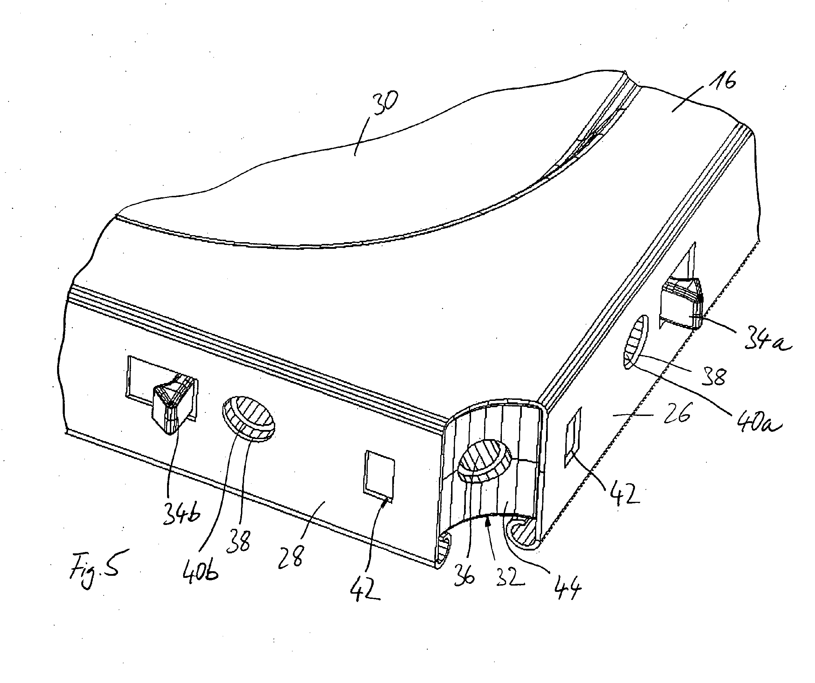

Die perspektivische Darstellung der Fig. 5 zeigt das Blechplattenelement 16 in einer der Fig. 4 ähnlichen Darstellung, allerdings ohne den Träger 14 und die Stoßschutzecke 20. Das Blechplattenelement 16 weist an seinen Seitenkanten jeweils eine Schürze 26, 28 auf, die sich von einer Grundfläche des Blechplattenelements 16 senkrecht nach unten erstrecken. An ihrer jeweiligen freien Kante sind die Schürzen 26, 28 kreisartig umgebördelt, so dass einerseits die freien Kanten der Schürzen 26, 28 versteift werden und darüber hinaus keine scharfen Kanten freiliegen. Das Blechplattenelement 16 ist im Bereich seiner Grundfläche mit einer Einprägung 30 versehen.

Im unmittelbaren Eckbereich ist das Blechplattenelement 16 kreisabschnittsförmig ausgespart, um im Wesentlichen bündig an der Außenkontur des kreisrohrförmigen Trägers 14 anliegen zu können.

Durch diese Ausnehmung hindurch ist ein Eckträger 32 zu erkennen, der von hinten, in der Fig. 5 die dem Betrachter abgewandte Seite, in die Ecke des Blechplattenelements 16 eingelegt ist. Der Eckträger 32 liegt einerseits an einer Unterseite der Grundplatte des Blechplattenelements 16 an und andererseits an den Umbördelungen der Schürzen 26, 28. Der Eckträger 32 erstreckt sich darüber hinaus mittels zweier Rasthaken 34a, 34b durch rechteckige Aussparungen in der Schürze 26 bzw. der Schürze 28 hindurch.

Im Bereich der Aussparung an der Ecke des Blechplattenelements 36 ist eine Gewindebuchse 36 zu erkennen, die im Wesentlichen entlang der Winkelhalbierenden der Ecke des Blechplattenelements 16 ausgerichtet und in dem Eckträger 32 verankert ist. Beispielsweise besteht der Eckträger 32 aus einem Kunststoffspritzgussteil und die Gewindebuchse 36 ist in den Kunststoff mit eingespritzt.

Die Schürzen 26, 28 weisen jeweils eine kreisrunde Durchgangsöffnung 38 auf, durch die jeweils eine weitere Gewindebuchse 40a, 40b des Eckträgers 32 zu erkennen ist. Während mittels eines in die entlang der Winkelhalbierenden ausgerichtete Gewindebuchse 36 ein Befestigungsbolzen eingeschraubt wird, der den Träger diagonal durchsetzt, sind die Gewindebuchsen 40a, 40b für Befestigungsschrauben vorgesehen, die die Schürzen 26, 28 an dem Eckträger 32 sichern. Schließlich sind in jeder Schürze 26, 28 benachbart zur Eckaussparung rechteckige Durchgangsöffnungen 42 vorgesehen, die zum Einstecken von Fixierstiften einer Stoßschutzecke dienen, wie nachfolgend noch erläutert wird.

Es ist anhand der Darstellung der Fig. 5 gut zu erkennen, dass der Eckträger 32 vollflächig an der Innenseite der Schürzen 26, 28 und darüber hinaus mit seiner Oberseite auch vollflächig an der Unterseite des Blechplattenelements 16 anliegt. Die Schürzen 26, 28 werden jeweils mittels separater Schrauben gegen die Außenkanten des Eckträgers 32 gezogen und der Eckträger 32 wird mittels eines in Fig. 5 nicht dargestellten Befestigungsbolzens in Richtung der Winkelhalbierenden der jeweiligen Ecke gegen den Träger gezogen. Der Eckträger 32 ist dabei so dimensioniert, dass vor dem Anziehen dieses Befestigungsbolzens einige zehntel Millimeter Spiel zwischen der Anlagefläche des Eckträgers 32 und der Außenfläche des Trägers 14 liegen. Erst nach dem Anziehen der Befestigungsbolzen mit einem vorgeschriebenen Anzugsmoment wird dann eine vollflächige Anlage zwischen Eckträger 32 und Träger 14 hergestellt. Dadurch kann sichergestellt werden, dass sowohl der Eckträger 32 als auch das Blechplattenelement 16 mittels des Eckträgers gegen den Träger vorgespannt werden, und es können eventuell vorhandene leichte Toleranzen ausgeglichen werden.

Auf die Rasthaken 34a, 34b wird die Stoßschutzecke 20, wie sie in der Fig. 4 dargestellt ist, aufgerastet und dadurch sicher gehalten.

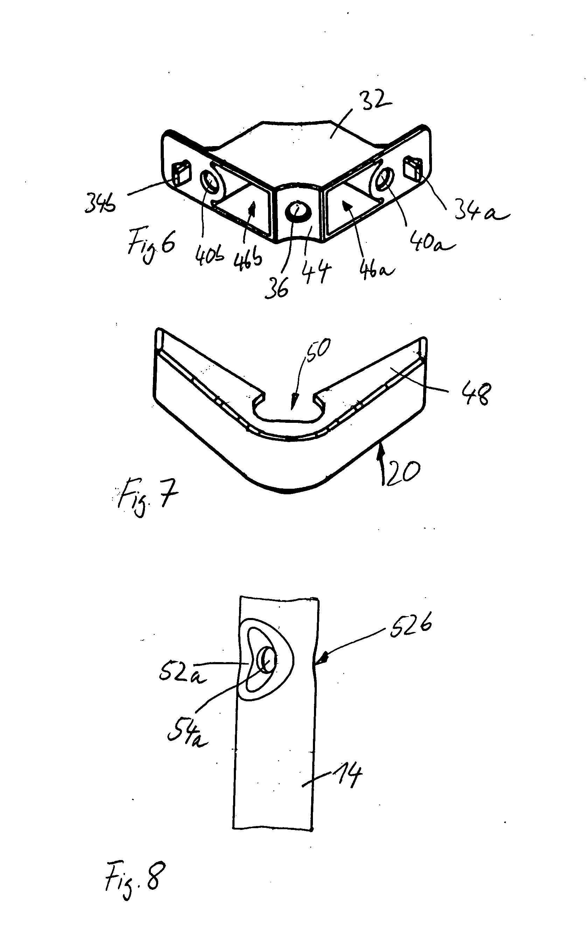

Die perspektivische Ansicht der Fig. 6 zeigt den Eckträger 32. Gut zu erkennen ist die Anlagefläche 44, die die Form eines Abschnitts der Mantelfläche eines Kreiszylinders aufweist und die mittig mit einer Durchgangsöffnung versehen ist, durch die Befestigungsbolzen in die Gewindebuchse 36 eintauchen kann. Weiterhin sind die Rasthaken 34a, 34b und die Innengewindebuchsen 40a, 40b zu sehen. Weiterhin ist zu erkennen, dass zwischen der Anlagefläche 44 im unmittelbaren Eckbereich und den Gewindebuxen 40a, 40b jeweils ein Hohlraum 46a, 46b ausgebildet ist. Dieser jeweilige Hohlraum 46a, 46b dient zum einen zur Materialersparnis, zum anderen erstrecken sich in diese Hohlräume aber auch Fixierstifte der Stoßschutzecke 21 hinein, die in die in Fig. 5 dargestellten Öffnungen 42 in dem Blechplattenelement 16 eingreifen und durch diese Öffnungen hindurch in die Hohlräume 46a, 46b vorragen.

Die Darstellung der Fig. 7 zeigt die Stoßschutzecke 20 in perspektivischer Ansicht. Wie zu erkennen ist, ist eine Oberfläche 48 der Stoßschutzecke 20 nicht eben sondern im Bereich der Umgebung der Ausnehmung für den Träger gewölbt, so dass die Ausnehmung 50 für den Träger in der Darstellung der Fig. 7 nicht kreisförmig erscheint. Tatsächlich ist die Ausnehmung 50 aber so ausgebildet, dass im montierten Zustand der Stoßschutzecke 20, wie dies in Fig. 4 dargestellt ist, die Stoßschutzecke 20 im Wesentlichen bündig an der Außenseite des Trägers 14 anliegt.

Die Darstellung der Fig. 8 zeigt einen Abschnitt des Trägers 14, der mit zwei einander gegenüberliegenden Einsenkungen 52a, 52b versehen ist, an deren Grund sich jeweils eine Durchgangsbohrung 54 durch die Wandung des Trägers 14 hindurch befindet. In der Darstellung der Fig. 8 ist lediglich eine Einsenkung 52a vollständig zu erkennen, die gegenüberliegende Einsenkung 52b ist lediglich durch eine Einsenkung in der in Fig. 8 rechten Außenkontur des Trägers 14 zu erkennen. Die Einsenkung 52a und die Durchgangsbohrung 54a entstehen durch Eindrücken eines Lochstempels mit scharfer Vorderkante in den Träger 14. Durch dieses Eindrücken verformt sich zunächst die Außenwand des Trägers 14 und bildet die Einsenkung 52a aus. Nach Ausbildung der Einsenkung 52a stanzt der Lochstempel dann die Durchgangsbohrung 54a in das Material der Außenwand des Trägers 14. Die gegenüberliegende Einsenkung 52b wird in gleicher Weise und zweckmäßigerweise gleichzeitig mit der Einsenkung 52a, durch gleichzeitiges Eindrücken eines Lochstempels von der gegenüberliegenden Seite her, ausgebildet. Während des Eindrückens der Lochstempel von gegenüberliegenden Seiten wird der Träger 14 in einem Werkzeug derart gehalten, dass dessen Außenwandung nicht nach außen über den ursprünglichen Außendurchmesser des Trägers 14 hinaus ausweichen kann. Dadurch ist sichergestellt, dass Außenflächen des Trägers 14 immer innerhalb der ursprünglichen kreisförmigen Querschnittsberandung des Trägers 14 liegen.

Durch Ausbilden der Einsenkung 52a, 52b wird der Träger 14 in dem Bereich dieser jeweiligen Einsenkung 52a, 52b erheblich versteift, so dass die Zugkräfte durch einen Befestigungsbolzen, der sich durch die Durchgangsbohrungen 54a in den Eckträger 32 hinein erstreckt, problemlos aufgenommen und in den Träger 14 eingeleitet werden können. Durch Vorsehen einer Durchgangsbohrung in einem rohrförmigen Träger wird an und für sich eine Schwächung dieses Trägers verursacht. Das Vorsehen der Einsenkungen 52a, 52b kann diese Schwächung nicht nur kompensieren sondern sorgt darüber hinaus für eine Versteifung des Trägers im Bereich der Einsenkungen 52a, 52b. Da Einsenkungen 52a, 52b und Durchgangsbohrungen 54a in ein und demselben Arbeitsgang durch Eindrücken eines Lochstempels hergestellt werden können, können die Herstellungskosten gering gehalten werden.

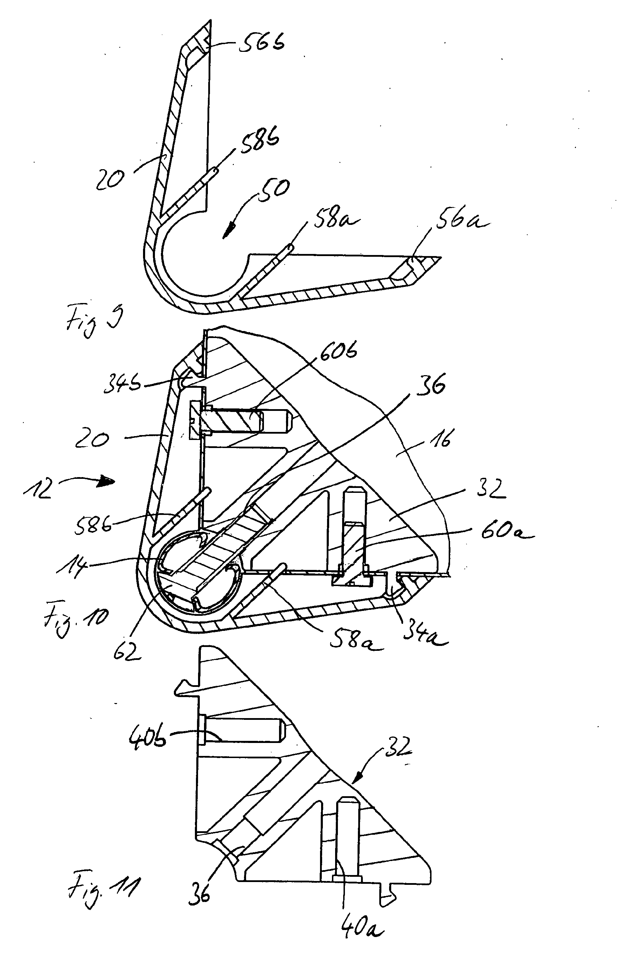

Die Darstellung der Fig. 9 zeigt eine Schnittansicht der Stoßschutzecke 20. Die Stoßschutzecke 20 ist als Kunststoffspritzgussteil hergestellt und in der Ansicht der Fig. 9 ist zu erkennen, dass die Ausnehmung 50 einen kreisförmigen Querschnitt aufweist und dadurch bündig an der Außenwandung des Trägers 14 anliegen kann. Die Stoßschutzecke 20 ist im Bereich ihrer beiden freien Enden mit jeweils einem Rastvorsprung 56a, 56b versehen. Diese Rastvorsprünge 56a, 56b schnappen im eingerasteten Zustand unter die Rasthaken 34a, 34b des Eckträgers 32 ein und halten dadurch die Stoßschutzecke 20 zuverlässig fest. Die Stoßschutzecke 20 ist darüber hinaus zu beiden Seiten der Ausnehmung 50 mit jeweils einem Fixierstift 58a, 58b versehen. Diese Fixierstifte greifen in die rechteckigen Öffnungen 42 des Blechplattenelements 16 ein, die in Fig. 5 dargestellt sind, und sorgen dadurch dafür, dass die Stoßschutzecke in ihrer Lage am Träger 14 fixiert bleibt. Die Fixierstifte 58a, 58b sind an ihrem vorderen Ende angeschrägt ausgebildet, um in die Öffnungen 42 des Blechplattenelements 16 eingreifen zu können und die Stoßschutzecke 20 dann korrekt positionieren zu können.

Die Schnittansicht der Fig. 10 zeigt die Eckverbindung 12 im zusammengebauten Zustand. Der Eckträger 32 ist mittels zweier Schrauben 60a, 60b an dem Blechplattenelement 16 sicher befestigt. Ein Befestigungsbolzen 62 erstreckt sich entlang der Winkelhalbierenden der Ecke des Blechplattenelements 16 durch den Träger 14 hindurch und ist in der Gewindebuchse 36 des Eckträgers 32 verankert. Durch den Befestigungsbolzen 62 wird eine Vorspannkraft aufgebracht, die den Eckträger 32 gegen den Träger 14 zieht und dadurch für eine sichere Verbindung von Blechplattenelement 16 und Träger 14 sorgt. Wie zu erkennen ist, ist ein linsenförmiger Schraubenkopf des Befestigungsbolzens 62 vollständig innerhalb der Einsenkung des Trägers 14 angeordnet, so dass der Schraubenkopf nicht über den kreisförmigen Außendurchmesser des unverformten Trägers 14 hinaussteht. Die Eckverbindung 12 wird dann mittels der Stoßschutzecke 20 abgedeckt, die auf die Rasthaken 34a, 34b des Eckträgers 32 aufgerastet wird und den Träger 14 im Bereich des Befestigungsbolzens 62 vollständig abdeckt. Der Befestigungsbolzen 62 ist dadurch bei aufgerasteter Stoßschutzecke 20 nicht zu erkennen, wie der Darstellung der Fig. 4 zu entnehmen ist. Es ist weiter zu erkennen, dass die Köpfe der Schrauben 60a, 60b in einen Hohlraum der Stoßschutzecke 20 vorragen. Wie bereits beschrieben wurde erstrecken sich die Fixierstifte 58a, 58b in die Durchgangsöffnungen 42 in den Schürzen des Blechplattenelements 16 und sichern die Stoßschutzecke 20 dadurch gegen Verschiebung in vertikaler Richtung, d.h. parallel zum Träger 14.

Die Schnittansicht der Fig. 11 zeigt erneut den Eckträger 32 im nicht montierten Zustand. Vorteilhafter Weise ist der Eckträger 32 als Kunststoffspritzgussteil mit eingespritzten Messinggewindebuchsen 36, 40a, 40b hergestellt.

## Patentansprüche

1. Eckverbindung, insbesondere für einen Servierwagen, zwischen einem Träger (14) und einer Ecke eines plattenförmigen Elements (16), mit einem Eckträger (32), der an der Ecke des plattenförmigen Elements (16) befestigt ist, und einem Befestigungsbolzen (62) zum Verbinden des Eckträgers (32) und des rohrförmigen Trägers (14) unter Vorspannung, wobei der Befestigungsbolzen (62) sich im Wesentlichen in Richtung der Winkelhalbierenden der Ecke des plattenförmigen Elements (16) erstreckt, wobei das plattenförmigen Element an seinen Seitenkanten jeweils eine Schürze (26, 28) aufweist, die sich von einer Grundfläche des plattenförmigen Elements (16) senkrecht nach unten erstreckt, wobei der Eckträger (32) einerseits an der Unterseite der Grundplatte des plattenförmigen Elements und andererseits an den Innenseiten der Schürzen (26, 28) anliegt, **dadurch gekennzeichnet, dass** der Eckträger (32) auf jeder Seite der Winkelhalbierenden mittels einer Schraube (60a, 60b) an den Schürzen (26, 28) befestigt ist.

2. Eckverbindung nach Anspruch 1, **dadurch gekennzeichnet, dass** sich der Befestigungsbolzen (62) vollständig durch den rohrförmig ausgebildeten Träger (14) hindurch erstreckt.

3. Eckverbindung nach Anspruch 1 oder 2, **dadurch gekennzeichnet, dass** der Befestigungsbolzen (62) als Schraubbolzen ausgebildet ist und in ein passendes Innengewinde im Eckträger (32) eingreift.

4. Eckverbindung nach wenigstens einem der vorstehenden Ansprüche, **dadurch gekennzeichnet, dass** der Eckträger (32) eine dem Träger (14) zugewandte Anlagefläche aufweist, die an eine Außenkontur des Trägers angepasst ist, und unter der Vorspannung des Befestigungsbolzens (62) mit der Anlagefläche (44) vollflächig an dem Träger (14) anliegt.

5. Eckverbindung nach wenigstens einem der vorstehenden Ansprüche, **dadurch gekennzeichnet, dass** der Träger 14) einen kreisförmigen Querschnitt aufweist.

6. Eckverbindung nach wenigstens einem der vorstehenden Ansprüche, **dadurch gekennzeichnet, dass** das plattenförmige Element (16) wenigstens im Eckbereich eine von einer Grundfläche senkrecht abragende Schürze (26, 28) aufweist, wobei der Eckträger (32) einerseits bündig an der Grundfläche und andererseits bündig an der Schürze (26, 28) anliegt.

7. Eckverbindung nach wenigstens einem der vorstehenden Ansprüche, **dadurch gekennzeichnet, dass** die Schürze (26, 28) und der Eckträger (32) lösbar miteinander verbunden sind.

8. Eckverbindung nach wenigstens einem der vorstehenden Ansprüche, **dadurch gekennzeichnet, dass** eine Stoßschutzecke (20) vorgesehen ist, die im Bereich der Eckverbindung (12) den Träger (14) und die Ecke des plattenförmigen Elements (16) wenigstens abschnittsweise abdeckt.

9. Eckverbindung nach wenigstens einem der vorstehenden Ansprüche, **dadurch gekennzeichnet, dass** die Stoßschutzecke (20) am Eckträger (32) befestigt ist.

10. Eckverbindung nach wenigstens einem der vorstehenden Ansprüche, **dadurch gekennzeichnet, dass** die Stoßschutzecke (20) mit Rastelementen (56a, 56b) in passende Gegenrastelemente (34a, 34b) des Eckträgers (32) eingreift.

11. Eckverbindung nach wenigstens einem der vorstehenden Ansprüche, **dadurch gekennzeichnet, dass** der Träger (14) im Bereich der Eckverbindung (12) mit wenigstens einer durch plastische Verformung des Trägers (14) gebildeten Einsenkung (52, 52b) versehen ist, an deren Grund eine die Rohrwandung durchsetzende Durchgangsbohrung (54a) angeordnet ist.

12. Eckverbindung nach wenigstens einem der vorstehenden Ansprüche, **dadurch gekennzeichnet, dass** der Träger (14) einen kreisförmigen Querschnitt und im Bereich der Eckverbindung (12) zwei einander gegenüberliegende, durch plastische Verformung des Trägers gebildete Einsenkungen (52a, 52b) aufweist, an deren Grund jeweils eine die Rohrwandung durchsetzende Durchgangsbohrung (54a) angeordnet ist.

13. Eckverbindung nach Anspruch 11 oder 12, **dadurch gekennzeichnet, dass** die Einsenkung (52a, 52b) und die Durchgangsbohrung (54a) in einem Arbeitsgang mittels Eindrücken eines Lochstempels in den Träger (14) gebildet sind.

14. Eckverbindung nach wenigstens einem der vorstehenden Ansprüche, **dadurch gekennzeichnet, dass** der Träger (14) und das plattenförmige Element (16) als Blechteil ausgebildet sind und dass der Eckträger (32) und die Stoßschutzecke (20) als Kunststoffteile ausgebildet sind.

## Claims

1. A corner connection, in particular for a serving trolley, between a carrier (14) and a corner of a plate-shaped element (16), comprising a corner carrier (32) fastened to the corner of the plate-shaped element (16) and a fastening pin (62) for joining the corner carrier (32) and the tubular carrier (14) under prestress, wherein the fastening pin (62) extends substantially in the direction of the angle bisector of the corner of the plate-shaped element (16), wherein the plate-shaped element is provided with an apron (26, 28) at each of its lateral edges, the apron extending downward vertically from a base area of the plate-shaped element (16), wherein the corner carrier (32) on the one hand adjoins the lower surface of the base plate of the plate-shaped element and on the other hand adjoins the inner surfaces of the aprons (26, 28), **characterized in that** the corner carrier (32) is fastened to the aprons (26, 28) on each side of the angle bisector by means of a screw (60a, 60b).

2. The corner connection of claim 1, **characterized in that** the fastening pin (62) extends entirely through the tubular carrier (14).

3. The corner connection of claim 1 or 2, **characterized in that** the fastening pin (62) is formed as a screw pin and engages in a matching female thread in the corner carrier (32).

4. The corner connection of one of the preceding claims, **characterized in that** the corner carrier (32) has a contact surface facing the carrier (14), the contact surface being adapted to an outer contour of the carrier, the corner carrier (32) adjoining the carrier (14) with the entire area of the contact surface (44) under the prestress of the fastening pin (62).

5. The corner connection of one of the preceding claims, **characterized in that** the carrier (14) has a circular cross-section.

6. The corner connection of one of the preceding claims, **characterized in that** the plate-shaped element (16) is provided with an apron (26, 28) extending vertically away from a base surface at least in the corner region, wherein the corner carrier (32) on the one hand adjoins the base surface and is flush with it and on the other hand adjoins the apron (26, 28) and is flush with it.

7. The corner connection of one of the preceding claims, **characterized in that** the apron (26, 28) and the corner carrier (32) are releasably tied to each other.

8. The corner connection of one of the preceding claims, **characterized in that** a shock protection corner (20) is provided, covering the carrier (14) and the corner of the plate-shaped element (16) at least in a section in the region of the corner connection (12).

9. The corner connection of one of the preceding claims, **characterized in that** the shock protection corner (20) is fastened to the corner carrier (32).

10. The corner connection of one of the preceding claims, **characterized in that** the shock protection corner (20) engages, with latch elements (56a, 56b), in matching counter latch elements (34a, 34b) of the corner carrier (32).

11. The corner connection of one of the preceding claims, **characterized in that** the carrier (14) is provided with at least one indentation (52, 52b) formed by plastic deformation of the carrier (14) in the region of the corner connection (12), a passage bore (54a) piercing through the wall of the tube being arranged at the base of the indentation.

12. The corner connection of one of the preceding claims, **characterized in that** the carrier (14) has a circular cross-section and two indentations (52a, 52b) formed by plastic deformation of the carrier and located opposite to each other in the area of the corner connection (12), wherein a passage bore (54a) piercing through the wall of the tube is arranged at the base of the indentations.

13. The corner connection of claim 11 or 12, **characterized in that** the indentation (52a, 52b) and the passage bore (54a) are formed in one operation by impressing a piercing die into the carrier (14).

14. The corner connection of one of the preceding claims, **characterized in that** the carrier (14) and the plate-shaped element (16) are formed as a sheet metal part and **in that** the corner carrier (32) and the shock protection corner (20) are formed as plastic parts.

## Revendications

1. Raccord d'angle, en particulier pour un chariot desserte, entre un support (14) et un coin d'un élément en forme de plaque (16) avec un support d'angle (32) fixé au coin de l'élément en forme de plaque (16) et un boulon de fixation (62) pour lier le support d'angle (32) et le support tubulaire (14) sous préserrage, le boulon de fixation (62) s'étendant essentiellement en direction de la bissectrice du coin de l'élément en forme de plaque (16), l'élément en forme de plaque comportant sur chacun de ses bords latéraux un tablier (26, 28) qui s'étend verticalement d'une surface de base de l'élément en forme de plaque (16) vers le bas, le support d'angle (32) restant d'un côté contre la surface inférieure de la plaque de base de l'élément en forme de plaque et de l'autre côté contre les surfaces intérieures des tabliers (26, 28), **caractérisé en ce que** le support d'angle (32) est fixé aux tabliers (26, 28) par le biais d'une vis (60a, 60b) sur chaque côté de la bissectrice.

2. Raccord d'angle selon la revendication 1, **caractérisé en ce que** le boulon de fixation (62) s'étend entièrement au travers du support (14) tubulaire.

3. Raccord d'angle selon la revendication 1 ou 2, **caractérisé en ce que** le boulon de fixation (62) est réalisé sous forme d'un boulon fileté qui entre dans un filetage femelle approprié dans le support d'angle (32).

4. Raccord d'angle selon au moins une des revendications précédentes, **caractérisé en ce que** le support d'angle (32) comporte une surface d'appui orientée vers le support (14) et adaptée au contour extérieur de support et qui reste intégralement avec la surface d'appui (44) contre le support (14) sous le préserrage du boulon de fixation (62).

5. Raccord d'angle selon au moins une des revendications précédentes, **caractérisé en ce que** le support (14) comporte une section transversale circulaire.

6. Raccord d'angle selon au moins une des revendications précédentes, **caractérisé en ce que** l'élément en forme de plaque (16) comporte au moins dans la zone du coin un tablier (26, 28) s'élançant perpendiculairement d'une surface de base, le support d'angle restant d'un côté contre la surface de base de manière affleurante et de l'autre côté contre le tablier (26, 28) de manière affleurante.

7. Raccord d'angle selon au moins une des revendications précédentes, **caractérisé en ce que** le tablier (26, 28) et le support d'angle (32) sont liés de manière défaisable.

8. Raccord d'angle selon au moins une des revendications précédentes, **caractérisé en ce qu'**un coin de protection contre les chocs (20) est prévu, le coin de protection contre les chocs couvrant le support (14) et le coin de l'élément en forme de plaque (16) au moins en partie dans la zone du raccord d'angle (12).

9. Raccord d'angle selon au moins une des revendications précédentes, **caractérisé en ce que** le coin de protection contre les chocs (20) est fixé au support d'angle (32).

10. Raccord d'angle selon au moins une des revendications précédentes, **caractérisé en ce que** le coin de protection contre les chocs (20) intervient avec des éléments d'encliquetage (56a, 56b) dans des éléments d'encliquetage d'opposition (34a, 34b) du support d'angle (32).

11. Raccord d'angle selon au moins une des revendications précédentes, **caractérisé en ce que** le support (14) est pourvu d'au moins un creux (52, 52b) formé par déformation plastique du support (14), au fond duquel est agencée une percée de passage (54a) qui transperce la paroi tubulaire.

12. Raccord d'angle selon au moins une des revendications précédentes, **caractérisé en ce que** le support (14) a une section transversale circulaire et comporte, dans la zone du raccord d'angle (12), deux creux (52a, 52b) opposés formés par déformation plastique du support au fond duquel une percée de passage (54a) qui transperce la paroi tubulaire est agencée.

13. Raccord d'angle selon la revendication 11 ou 12, **caractérisé en ce que** le creux (52a, 52b) et la percée de passage (54a) sont formés en une seule opération en enfonçant un poinçon dans le support (14).

14. Raccord d'angle selon au moins une des revendications précédentes, **caractérisé en ce que** le support (14) et l'élément en forme de plaque (16) sont réalisés sous forme d'une pièce en tôle et **en ce que** le support d'angle (32) et le coin de protection contre des chocs (20) sont réalisés sous forme de parties en plastique.
